# EUROPEAN PATENT SPECIFICATION

(11) **EP 2 427 068 B1**
(45) Date of publication and mention of the grant of the patent: **31.12.2014**
(21) Application number: 10717203.3
(22) Date of filing: 29.04.2010
(51) Int. Cl.: A23L 2/39, A23L 1/185

(54) **PROCESS**
VERFAHREN
PROCÉDÉ

(30) Priority: 08.05.2009 GB 0907942
(43) Date of publication of application: 14.03.2012
(73) Proprietor: Cadbury UK Limited, Birmingham B30 2LU (GB)
(72) Inventor: AMBESKAR, Satish, PIN4000606 (IN); BHOGLE, Pushkar, PIN4000606 (IN); Suri, Krishna Mohan, Maharashtra 4000026 (IN); Bhatia, Atul, 4000026 (IN)
(74) Representative: Ward, David Ian
(86) International application number: PCT/GB2010/000854
(87) International publication number: WO 2010/128277

(56) References cited:
- EP-A1- 1 068 807
- EP-A1- 1 245 578
- EP-A2- 0 920 814
- US-A- 5 032 411

## Description

### Technical Field of the Invention

The present invention relates to a process for the manufacture of a dried malted beverage product and a process for preparing a malted beverage. In particular, the present invention relates to a more efficient process for manufacturing a dried malted cocoa beverage, whereby the beverage is manufactured using a single vessel for mixing, drying and granulation.

### Background to the Invention

The manufacture of a malted beverage is well known. An example of a popular malted cocoa beverage is Bournvita®, which is a product currently marketed by Cadbury®. Generally speaking, the process of making Bournvita® first involves making slurry of the recipe ingredients and then drying the slurry so as to form a powder. The recipe ingredients comprise bulk solids (sugar, cocoa powder, skimmed milk powder/whey powder etc.), minor solids (such as salt and flavours etc.), bulk liquid ingredients (malt extract, caramelised sugar syrup) and minor liquid ingredients (flavours, soya lecithin, rework slurry etc.). The slurry is usually dried in a vacuum oven in a batch or continuous manner. The process is expensive as the apparatus used for manufacturing the beverage comprises a number of vessels which are linked together so as to mix and dry the product. The use of a number of vessels increases not only the overall cost of the apparatus, but also the running costs and time involved with servicing and cleaning.

US 6,541,056 discloses a process for brewing malt beverages. In the examples of this document, malt extract, skimmed milk powder, cocoa, sugar, fats, minerals and vitamins are mixed in a ribbon blender with water to provide a wet mixture. The wet mixture is then transferred to a vacuum band drier and subsequently crushed and milled to provide a base powder. A dry mix of skimmed milk powder and cocoa is then combined with the base powder to provide the final powder. This process has a number of steps which are undertaken in different apparatus which increases the process time and costs.

EP09020814 is concerned with producing a malted beverage powder by extrusion. The mixing step is effected by an extruder with the extrudate being passed to a dryer via an optional chilling station. From the dryer, it is then passed through a grinder.

EP1245578 relates to a fiber-enriched beverage comprising 1.5-90 g/l of branched maltodextrins, a reducing sugar content of less than 20%, a polydispersity index of less than 5 and a number-average molecular weight (Mn) of up to 4500.

US5032411 describes hypotonic beverage compositions and beverage concentrates adapted for oral administration of water, physiologically essential electrolytes, nutrient minerals, carbohydrates, and other ingredients to a human body.

It is an object of the present invention to provide an improved process for producing a dried malted beverage.

### Summary of the Invention

In accordance with a first embodiment of the invention, there is provided a process for preparing a dried malted beverage product comprising:
a) mixing together solid and liquid constituents of the beverage product in a single vessel so as to form a mixture;
b) subjecting the mixture in the vessel to heat at a lowered pressure so as to effect drying and granulation of the mixture and form the dried malted beverage product; and
c) discharging the dried malted beverage product from the vessel.

The invention provides a process in which the mixing, drying and granulation takes place in a single vessel, without the requirement of separate vessels for processing the mixture. This not only reduces the cost of building the apparatus, but also allows for throughput to be increased and the apparatus to be cleaned and serviced in less time.

The term "dried" in relation to a dried malted beverage product, refers to a product which is substantially free of moisture and which requires hydration before the product can be drunk as a beverage. Commonly, the product will be hydrated using hot or cold milk and/or water. The skilled addressee will understand that such dried products may contain a very small amount of moisture, which will typically be no more than 3%. Ideally, the moisture content will be about 1.5% ±0.5%.

It will be understood that the dried malted beverage product comprises a malt ingredient such as a malt extract. The malt ingredient may be employed in the process in solid form (e.g. malt extract powder) or in liquid form (e.g. a liquid malt extract).

The solid constituents may comprise one or more selected from malt extract powder, maltodextrin, cocoa powder, milk powder /dairy creams, whey powder, salt, flavours, natural colours and mixtures thereof. Other solid constituents may also be apparent to the skilled addressee.

The liquid constituents may comprise one or more selected from water, malt extract, caramelised sugar syrup, natural colours, flavours, soya lecithin, maltodextrin, and mixtures thereof. Again, other liquid constituents may also be apparent to the skilled addressee.

The solid constituents may further comprise sugar. Alternatively, the liquid constituents may further comprise a sugar solution. In another alternative, the sugar may be present in both crystalline (solid) and solution (liquid).

Where at least part of the sugar is provided in a liquid form, prior to introducing it at step (a), the process may comprise forming a sugar solution by dissolving crystalline sugar within a solvent. In one embodiment the sugar solution may be hearting the mixture to between 105°C -130°C until the solution has a moisture in the range of 5% to 30% and thus forming a solution having a concentration of about 70% to 95%.

The term "sugar" should be taken to mean any monosaccharide or disaccharide, including sucrose, fructose, glucose, dextrose, lactose, galalactose, mannose , or polyol.

Supplying the sugar at least partially in the form of a solution provides a number of benefits and it is believed that it helps to facilitate the production of the dried malted beverage product in a single vessel. For example, the use of a sugar solution ensures that the moisture required for the optimal flavour/taste, and uniform colour development is available - as opposed to a simple dry mix process, and the flavour is in the zone which is reasonably close to the traditional oven process. Furthermore, having at least one other ingredient being more hygroscopic than sugar (example malt powder), results in faster crystallisation of the sugar so as to drive away moisture from sugar. The use of optimal temperature and pressure conditions results in accelerated drying & granulation of the mixture. The moisture from the sugar solution also acts as a binding agent for granulation and also supports development of a homogeneous colour and flavour development within the product.

The dried malted beverage product may comprise up to 40% of sugar. Alternatively, the dried malted beverage product may comprise up to 35%, 30%, 25%, 20%, 15%, or 10% of sugar. The dried malted beverage product may comprise in the range of between 5% to 40%, or 10% to 20% of sugar.

Part or all of the sugar content may be replaced with maltodextrin. Maltodextrin may be present in a solid or concentrated solution form. If maltodextrin is included in the product, it may comprise up to 25%, 20%, 15%, 10%, or 5%. If maltodextrin is included in the product, it may be included in an amount which is substantially equal to the sugar component present in the product - for example the product may comprise ∼15% sugar and ∼15% maltodextrin. Maltodextrin need not be included in the product and may be omitted or replaced with sugar. Step (b) may comprise heating the mixture to a temperature in the range of 60 to 80°C under a lowered pressure in the range of 1 to 20 kPa. Step (b) may comprise heating the mixture to a temperature in the range of 65 to 75°C under a lowered pressure in the range of 1 to 15 kPa. Combining heat with a lowered pressure, lowers the boiling temperature of the mixture and thus reduces the risk of burnt "off" flavours in the resulting product and will also prevent fouling of the vessel.

Step (a) may further comprise the addition of water.

The solid constituents may be mixed together prior to being supplied to the vessel.

The process may produce the product in batches, or in a continuous manner. The skilled addressee will appreciate that certain modifications to the process may be required to accommodate either production process.

In accordance with a further embodiment of the present invention, there is provided a dried malted beverage product produced according to the process as herein above described.

In accordance with yet a further embodiment of the present invention, there is provided a malted beverage formed using a dried malted beverage product herein above described.

In accordance with a further embodiment of the present invention, there is provided a process for preparing a malted beverage comprising preparing a dried malted beverage product in accordance with the first embodiment, followed by mixing the dried malted beverage product with hot or cold water or milk to prepare the malted beverage.

A dried malted beverage producing apparatus which may be used in the process described herein comprises:
a) a single vessel for receiving and mixing together solid and liquid constituents;
b) means for heating the vessel;
c) means for lowering the pressure of the vessel; and
d) means for discharging the malted beverage product from the vessel.

The vessel may comprise a substantially cylindrical body having a mixing means disposed therein. A number of mixing arrangements for use in such vessels will be apparent to the skilled addressee. The mixing means may comprise one or more mixing blades, paddles, plough elements, and chopping elements. The one or more mixing blades, paddles, plough elements or chopping elements may be attached to a shaft which is rotatable within the cylindrical body. Alternatively, the vessel may be rotatable around the shaft. In a further alternative, the vessel may be rotatable and have one or more mixing blades, paddles or plough elements disposed on the interior of the vessel.

The vessel may comprise a plough mixer - such as a shear plough mixer.

The heating means may comprise a number of arrangements suitable to heat the mixture, such as heating elements attached or embedded in the side of the vessel, or a heated jacket surrounding at least part of the vessel. If a heated jacket is employed, the jacket may be heated by means of a fluid - such as a steam or water. The pressure lowing means may comprise a vacuum pump. The means for discharging the dried malted beverage product may simply be an aperture formed in the vessel, which can be opened when desired. Additionally, the discharged dried malted beverage product may be cooled by a cooling means - such as a cooling tunnel or cooling container prior to the product being packaged.

The apparatus may further comprise a solid constituent mixing means for mixing the solid constituents before they are supplied to the vessel. The solid constituent mixing means may be in fluid communication with the vessel so as to enable the solid constituents to be supplied the vessel. Fluid communication may be effected by a number of arrangements, such as a conduit or a conveyor of some kind.

A kit of parts which may be used in the process described herein comprises solid and liquid constituents of the dried malted beverage product and an apparatus, the apparatus comprising:
a) a single vessel for receiving and mixing together solid and liquid constituents;
b) means for heating the vessel;
c) means for lowering the pressure of the vessel; and
d) means for discharging the malted beverage product from the vessel.

The apparatus of the kit of parts may have one or more of the features as herein above described with reference to the dried malted beverage producing apparatus.

The apparatus and/or kit of parts may be used in the process as herein above described.

### Detailed Description of the Invention

A specific embodiment of the present invention will now be described, by way of example only, with reference to the accompanying drawings, in which:
Figure 1 shows a cut-away diagram of the apparatus used in accordance with the present invention;
Figure 2 is a photograph of a chopping blade arrangement used in the apparatus shown in Figure 1; and
Figure 3 is a photograph of the interior of the apparatus showing two chopping blades as shown in Figure 2.

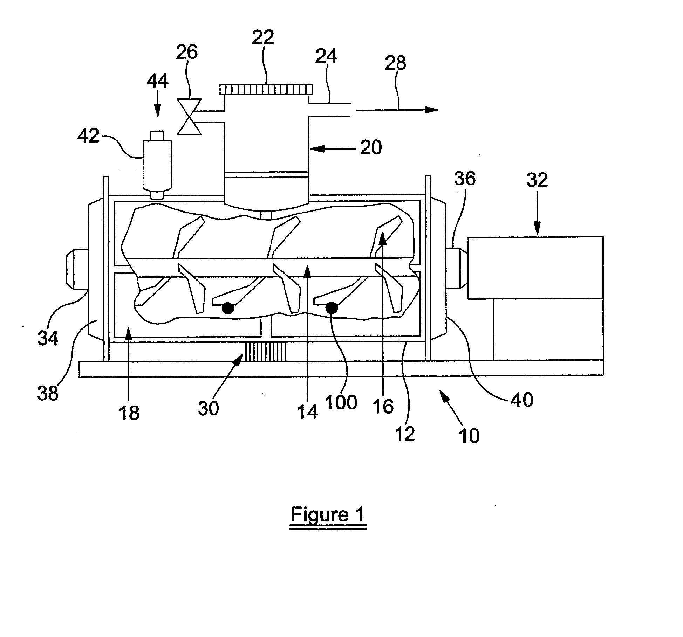

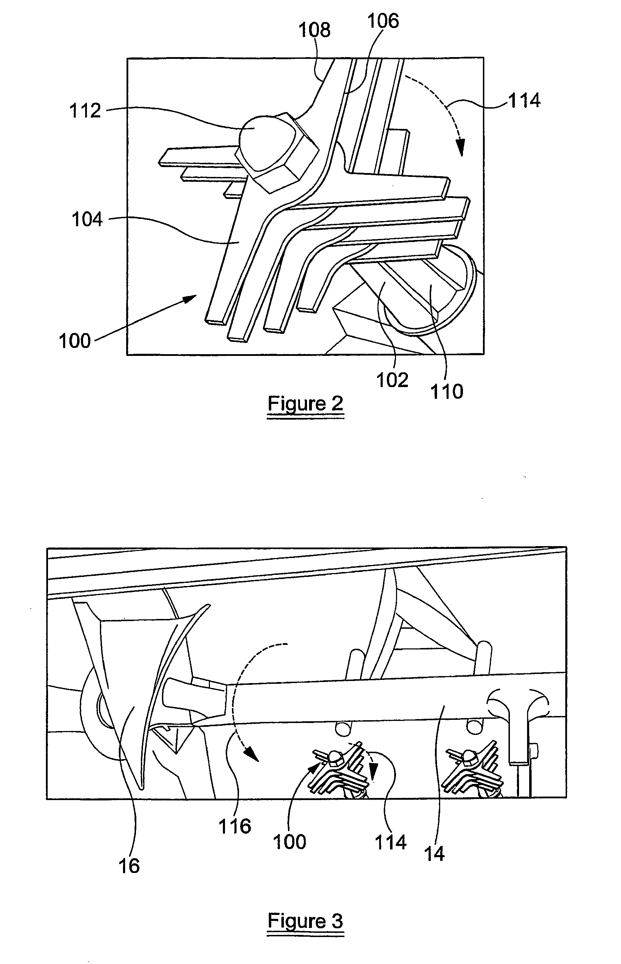

With reference to Figures 1 to 3, there is shown a plough shear mixer 10 briefly comprising a generally cylindrical vessel 12 having a single horizontal shaft 14 which is rotatable (in the direction indicated by arrow 116 in Figure 3) through the centre of the vessel. A number of plough shaped paddles 16, extend outwardly from the shaft 14, to a position close to the interior surface of the vessel 12 so that when the shaft rotates, the paddles run close to the interior surface and sweep across the majority of the whole inner surface of the vessel. The exterior surface of the vessel 12 is covered by a number of jackets 18 which are divided into different sections, through which fluids can flow so as to heat and cool the vessel during operation.

The vessel 12 has a dust collector dome 20 extending vertically upright from a central location in the vessel. The dome 20 is formed as a cylindrical extension. The dome 20 terminates with a removable cover plate 22 and has an outlet 24 which can connect to a vacuum system and a dust handling system (not shown) for the processing of dust 28 and the dome 20 also accommodates inlet valves 26 for liquid constituents.

The mixer 10 may also have a cooling tower (or other arrangement) (not shown) for removing condensate from the mixture.

At the base of vessel 12, there is provided a discharge valve 30 which is used to discharge of finished product from the vessel 12.

The shaft 14 is driven by a motor 32. The rotation of the shaft 14 within the vessel 12 is facilitated by means of mechanical shaft seals 34, 36 located within end caps 38, 40 which are disposed at either end of the vessel 12. The mechanical shaft seals 34, 36 have water flowing through them under pressure, so as to cool and lubricate the seal faces. The seals are protected by temperature, pressure and may also include flow level switches if desired.

The vessel 12 also has an additional solid constituent inlet 42, extending vertically from the vessel, through which powdered and solid constituents 44 can be inserted into the vessel 12.

In use, the plough shear mixer 10 is used to produce a dried malted beverage product from the various constituents. Generally speaking, bulk solids (cocoa powder, skimmed milk powder/whey powder/dairy cream, salt and flavours) are mixed together and fed into the vessel 12, with bulk liquids (water, malt extract, caramelised sugar syrup, flavours, soya lecithin) are added to the vessel and mixed together so as to form a mixture. During addition, the motor 32 is used to rotate the shaft 14 and in doing so, the agitator paddles 16 thoroughly mix the constituents together. The vessel 12 is substantially sealed during mixing as it is sealed at both ends via the end caps 38,40 and the shaft 14 freely rotates within the mechanical face seals 34,36.

A sugar solution is then added to the vessel and mixed in with the mixture.

During the mixing, the jackets 18 are heated with a hot fluid (such as water or steam) to a particular temperature so as to heat the mixture. The vapour forms in the dome 20 and the vapour 28 it is removed via the outlet 24 for further processing by means of the vapour handling system (which will be described in greater detail below). After granulation has occurred, the powder is cooled and discharged via the discharge valve 30 for further processing/storage/shipment. To facilitate cleaning and servicing, the cover plate 22 on the dome is removable so as to allow entry to the interior of the vessel 12.

The interior of the apparatus 10 also incorporates rotary chopping blade assemblies 100 which are shown in greater detail in the photograph in Figure 2. The chopping blade assembly 100 briefly comprises a rotatable shaft 102 which defines a longitudinal axis, from which a number of blade elements 104 extend. The blade elements 104 are in a stacked arrangement and each element resembles a twin blade propeller having leading cutting edges 106 and non-cutting trailing edges 108. Each blade element 104 is stacked above on another on the shaft 102 such that the cutting edges 106 of adjacent elements do not overlap and the stack forms four rows of cutting edges extending in a perpendicular arrangement from the longitudinal axis. The shaft 102 runs through the centre of each blade element and is attached at one end to a blade motor 110, whereas a nut 112 at secures the opposite end of the shaft secures the blade elements 114 thereto. In use, at the appropriate time, the blade motor 110 is turned on so as to rotate the chopper blades 104 in a clockwise direction 114 which acts to break lumps in the mixture and help to effect granulation and arrive at the correct bulk density in final product. The chopping blades 104 are only actuated after the liquid constituents are added to the mixture.

The Reactor 10 is an extremely effective and the incorporation of ingredients is accomplished in a shorter time when compared to conventional apparatus which requires separate mixing and processing vessels.

### Example 1

A batch of the dried malted beverage was produced using a single plough shear mixer 10.

Firstly, recipe quantities of the dry ingredients (malt extract powder; cocoa powder; caramelised sugar solution (CSS) Powder; vitamin mix; mineral mix; ethyl vanillin (EV) powder; and maltodextrin were mixed together so as to provide a powder mix.

Before inserting the powder mix into the plough shear mixer, hot water was circulated in the hot water jacket 18. The jacket water temperature was at around 65-75°C. After the correct temperature of the jacket 18 was attained, the shaft 14 was rotated and the dry ingredients inserted through a solid constituent inlet 44. A rotary chopping blade 100 inside the mixer was switch

The vacuum pump was turned on and connected to the mixer. A vacuum in that range of 1 - 20 kPa was found to be sufficient for the process. The batch was mixed for about 10 minutes and the rpm of the shaft 14 maintained at about 60-70. The recipe weight of sugar had previously been dissolved in the recipe amount of water so as to form a solution and liquid glucose also added to the sugar solution. The solution was then heated to between 105 °C and 125 °C and moisture content modified or maintained in the range of 5% to 30%.

Before the sugar solution was added to the plough shear mixer 10, the vacuum was released (to enable insertion of the solution into the vessel) and the vessel charged with the sugar solution via the inlet valve 26. However, recent tests have indicated that adding the sugar solution under a lowered pressure vacuum will also produce a satisfactory product. The hot solution was charged into the mixer while both the fan and the plough were running. This ensured that the solution was sprayed uniformly all over the batch. After the addition of the solution, the vacuum was once again connected and mixing continued for another 15-20 minutes.

The vacuum was then released and the vacuum pump stopped. The chopper 100 and shaft 14 were stopped and the discharge valve 30 at the bottom of the vessel opened and the batch collected. The product was cooled to less than 30°C before being packed.

Table 1 below shows the approximate ranges of dry weight of the final dried malted beverage composition.

**Table 1 - Example Product Composition**

| **Ingredient** | **Approx Dry wt%** |
|---|---|
| Malt Extract Powder | 58-68 |
| Cocoa Powder | 18-28 |
| EV Powder | Trace |
| Salt | 0.0-0.1 |
| Vitamin Mix | 0.0 - 0.5 |
| Mineral Mix | 0.0-0.5 |
| CSS Powder | 1.5-3.5 |
| Maltodextrin | 0.75 - 18 |
| Sugar Syrup | 0-15 |

A beverage product was manufactured to a recipe comprising 65 %wt malt extract power, 20 %wt cocoa powder, traces %wt of EV powder, salt, vitamin mix, mineral mix, 2 %wt CS powder, 4 %wt maltodextrin and 8 %wt sugar solution.

The resultant dried malted beverage had the same good taste and texture profiles when mixed with hot or cold water or milk as existing products and the use of a single plough shear mixer enabled production costs to be reduced. A number of benefits were obtained by using a sugar solution rather than crystalline sugar. The use of a sugar solution ensures that the moisture required for the optimal flavour, taste and uniform colour development is available - as opposed to a simple dry mix process, and the flavour is in the zone reasonably close to the traditional oven process. With at least one other ingredient being more hygroscopic than sugar (example Malt powder), the sugar tends to crystallize fast enough and drive moisture away from Sugar. The use of optimal temperature and pressure conditions results in very fast drying & granulation of the powder mix. It is believed that the moisture from the sugar solution acts as a binding agent for granulation and also supports development of (a) homogeneous colour and (b) flavour development.

### Example 2

A further batch of the dried malted beverage was produced using the single plough shear mixer 10 in an almost identical protocol as described in Example 1. However, crystalline sugar was used in place of a liquid sugar and this crystalline sugar was included during the initial dry ingredient mixing stage.

The resultant dried malted beverage had comparable taste and texture profiles when mixed with hot water or milk as existing products and the use of a single plough shear mixer enabled production costs to be greatly reduced.

The foregoing embodiments are not intended to limit the scope of protection afforded by the claims, but rather to describe examples of how the invention may be put into practice.

## Claims

1. A process for preparing a dried malted beverage product comprising:
a) mixing together solid and liquid constituents of the beverage product in a single vessel so as to form a mixture;
b) subjecting the mixture in the vessel to heat at a lowered pressure so as to effect drying and granulation of the mixture and form the dried malted beverage product; and
c) discharging the dried malted beverage product from the vessel.

2. A process as claimed in claim 1, wherein solid constituents comprise one or more selected from cocoa powder, skimmed milk powder/milk powder/dairy cream, whey powder, salt, flavours, natural colours, malt extract powder, maltodextrin and mixtures thereof.

3. A process as claimed in either claim 1 or 2, wherein the liquid constituents comprise one or more selected from water, malt extract, caramelised sugar syrup, flavours, soya lecithin, natural colours, maltodextrin and mixtures thereof.

4. A process as claimed in any preceding claim, wherein the solid constituents further comprise sugar.

5. A process as claimed in any one of claims 1 to 3, wherein the liquid constituents further comprise a sugar solution.

6. A process as claimed in any preceding claim, wherein the dried malted beverage product comprises up to 40 %wt of sugar.

7. A process as claimed in any one of claims 4 to 6 wherein the product comprises up to 25 %wt of maltodextrin.

8. A process as claimed in any one of claims 4 to 7, wherein the product comprises maltodextrin and sugar in substantially equal amounts.

9. A process as claimed in any preceding claim, wherein step (b) comprises heating the mixture to a temperature in the range of 60 to 80°C.

10. A process as claimed in any preceding claim, wherein step (b) comprises heating the mixture under a lowered pressure in the range of 1 to 20 kPa.

11. A process as claimed in any preceding claim, wherein step (a) further comprises the addition of water.

12. A process as claimed in any preceding claim, wherein the solid constituents are mixed together prior to being supplied to the vessel.

13. A process for preparing a malted beverage comprising preparing a dried malted beverage product in accordance with any one of the preceding claims, followed by mixing the dried malted beverage product with hot or cold water or milk to prepare the malted beverage.

## Patentansprüche

1. Verfahren für die Herstellung eines getrockneten gemalzten Getränkprodukts, umfassend:
a) das Zusammenmischen fester und flüssiger Bestandteile des Getränkprodukts in einem einzigen Gefäß, um eine Mischung zu bilden;
b) das Unterwerfen der Mischung in dem Gefäß einer Hitze bei reduziertem Druck, um das Trocknen und Granulieren der Mischung zu bewirken und das getrocknete gemalzte Getränkprodukt zu bilden; und
c) das Ablassen des getrockneten gemalzten Getränkprodukts aus dem Gefäß.

2. Verfahren nach Anspruch 1, wobei die festen Bestandteile eines oder mehrere umfassen ausgewählt von Kakaopulver, Magermilchpulver/Milchpulver/Rahm, Molkenpulver, Salz, Geschmacksstoffen, natürlichen Farbstoffen, Malzextraktpulver, Maltodextrin und Mischungen davon.

3. Verfahren nach Anspruch 1 oder 2, wobei die flüssigen Bestandteile eines oder mehrere umfassen ausgewählt von Wasser, Malzextrakt, karamellisiertem Zuckersirup, Geschmacksstoffen, Sojalecithin, natürlichen Farben, Maltodextrin und Mischungen davon.

4. Verfahren nach einem der vorhergehenden Ansprüche, wobei die festen Bestandteile des Weiteren Zucker umfassen.

5. Verfahren nach einem der Ansprüche 1 bis 3, wobei die flüssigen Bestandteile des Weiteren eine Zuckerlösung umfassen.

6. Verfahren nach einem der vorhergehenden Ansprüche, wobei das getrocknete gemalzte Getränkprodukt bis zu 40 Gew.-% Zucker umfasst.

7. Verfahren nach einem der Ansprüche 4 bis 6, wobei das Produkt bis zu 25 Gew.-% Maltodextrin umfasst.

8. Verfahren nach einem der Ansprüche 4 bis 7, wobei das Produkt Maltodextrin und Zucker in im Wesentlichen gleichen Mengen umfasst.

9. Verfahren nach einem der vorhergehenden Ansprüche, wobei der Schritt (b) das Erhitzen der Mischung auf eine Temperatur im Bereich von 60 bis 80 °C umfasst.

10. Verfahren nach einem der vorhergehenden Ansprüche, wobei der Schritt (b) das Erhitzen der Mischung unter einem reduzierten Druck im Bereich von 1 bis 20 kPa umfasst.

11. Verfahren nach einem der vorhergehenden Ansprüche, wobei der Schritt (a) des Weiteren die Zugabe von Wasser umfasst.

12. Verfahren nach einem der vorhergehenden Ansprüche, wobei die festen Bestandteile zusammengemischt werden, bevor sie dem Gefäß zugeführt werden.

13. Verfahren für die Herstellung eines gemalzten Getränks, umfassend das Herstellen eines getrockneten gemalzten Getränkprodukts nach einem der vorhergehenden Ansprüche, gefolgt von Mischen des getrockneten gemalzten Getränkprodukts mit heißem oder kaltem Wasser oder heißer oder kalter Milch, um das gemalzte Getränk herzustellen.

## Revendications

1. Procédé permettant de préparer une boisson maltée déshydratée comprenant les étapes consistant à :
a) mélanger ensemble des constituants solides et liquides de la boisson dans un récipient unique afin de former un mélange ;
b) soumettre le mélange dans le récipient à de la chaleur à une pression diminuée de manière à provoquer une déshydratation et une granulation du mélange et former la boisson maltée déshydratée ; et
c) retirer la boisson maltée déshydratée du récipient.

2. Procédé selon la revendication 1, dans lequel les constituants solides comprennent un ou plusieurs constituants sélectionnés parmi de la poudre de cacao, de la poudre de lait écrémé/de la poudre de lait/de la crème laitière, de la poudre de petit lait, du sel, des arômes, des colorants naturels, de la poudre d'extrait de malt, de la maltodextrine et des mélanges de ceux-ci.

3. Procédé selon la revendication 1 ou 2, dans lequel les constituants liquides comprennent un ou plusieurs constituants sélectionnés parmi de l'eau, de l'extrait de malt, du sirop de sucre caramélisé, des arômes, de la lécithine de soja, des colorants naturels, de la maltodextrine et des mélanges de ceux-ci.

4. Procédé selon l'une quelconque des revendications précédentes, dans lequel les constituants solides comprennent en outre du sucre.

5. Procédé selon l'une quelconque des revendications 1 à 3, dans lequel les constituants liquides comprennent en outre une solution de sucre.

6. Procédé selon l'une quelconque des revendications précédentes, dans lequel la boisson maltée déshydratée comprend jusqu'à 40 % en poids de sucre.

7. Procédé selon l'une quelconque des revendications 4 à 6, dans lequel la boisson comprend jusqu'à 25 % en poids de maltodextrine.

8. Procédé selon l'une quelconque des revendications 4 à 7, dans lequel la boisson comprend de la maltodextrine et du sucre en quantités essentiellement égales.

9. Procédé selon l'une quelconque des revendications précédentes, dans lequel l'étape (b) comprend un chauffage du mélange jusqu'à une température comprise dans la plage entre 60 et 80°C.

10. Procédé selon l'une quelconque des revendications précédentes, dans lequel l'étape (b) comprend un chauffage du mélange sous une pression diminuée comprise dans la plage entre 1 et 20 kPa.

11. Procédé selon l'une quelconque des revendications précédentes, dans lequel l'étape (a) comprend en outre l'ajout d'eau.

12. Procédé selon l'une quelconque des revendications précédentes, dans lequel les constituants solides sont mélangés ensemble préalablement à être fournis dans le récipient.

13. Procédé permettant de préparer une boisson maltée comprenant les étapes consistant à préparer une boisson maltée déshydratée selon l'une quelconque des revendications précédentes, puis mélanger la boisson maltée déshydratée avec de l'eau chaude ou froide ou du lait chaud ou froid afin de préparer la boisson maltée.
